# EUROPEAN PATENT APPLICATION

(11) **EP 4 744 566 A1**
(43) Date of publication of application: **20.05.2026**
(21) Application number: 24838620.3
(22) Date of filing: 28.06.2024
(51) Int. Cl.: A47L 11/24

(54) **ROLLER BRUSH ASSEMBLY FOR ROBOT VACUUM CLEANER, AND ROBOT VACUUM CLEANER**

(30) Priority: 10.07.2023 CN 202310836645; 10.07.2023 CN 202321789202 U; 31.08.2023 CN 202311120242; 31.08.2023 CN 202322365427 U
(71) Applicant: Hangzhou Ezviz Software Co., Ltd., Zhejiang 310051 (CN)
(72) Inventor: ZHANG, Lele, Hangzhou, Zhejiang 310051 (CN); JIN, Jingyang, Hangzhou, Zhejiang 310051 (CN); MENG, Xiangwei, Hangzhou, Zhejiang 310051 (CN)
(74) Representative: Schmitz, Joseph
(86) International application number: PCT/CN2024/102491
(87) International publication number: WO 2025/011365

(57) **Abstract**

The present application relates to a roller brush assembly for a robot vacuum cleaner, and a robot vacuum cleaner. According to the present application, a rotating main shaft of a roller brush assembly can be provided with a hollow shaft cavity and a mounting slit penetrating from the outer shaft wall to the hollow shaft cavity. A fixed tooth row component and a movable tooth row component are inserted into the mounting slit, and a moving component is arranged in the hollow shaft cavity. On the basis of the transmission connection of the moving component and a fixed shaft component inserted into the hollow shaft cavity, and the transmission connection of the moving component and the movable tooth row component, the moving component can reciprocatingly move in the axial direction during rotation of the rotating main shaft relative to the fixed shaft component, and the movable teeth of the movable tooth row component are triggered by the reciprocating motion to perform reciprocating staggered cutting motion relative to the fixed teeth of the fixed tooth row component. Therefore, by means of the reciprocating staggered cutting motion of the movable teeth protruding from the outer shaft wall relative to the fixed teeth, the roller brush assembly can have the capability of autonomously implementing active cutting of the filament-shaped dirt wound and wrapped on the outer shaft wall of the rotating main shaft.

## Description

The present application claims the priorities to a Chinese patent application No. 202310836645.8 filed with the State Intellectual Property Office of People's Republic of China on July 10, 2023 and entitled "rolling brush assembly for robot vacuum cleaner, and robot vacuum cleaner", a Chinese patent application No. 202321789202.X filed with the State Intellectual Property Office of People's Republic of China on July 10, 2023 and entitled "rolling brush assembly for robot vacuum cleaner, and robot vacuum cleaner", a Chinese patent application No. 202311120242.X filed with the State Intellectual Property Office of People's Republic of China on August 31, 2023 and entitled "rolling brush assembly for robot vacuum cleaner, and robot vacuum cleaner", and a Chinese patent application No. 202322365427.9 filed with the State Intellectual Property Office of People's Republic of China on August 31, 2023 and entitled "rolling brush assembly for robot vacuum cleaner, and robot vacuum cleaner", which are incorporated herein by reference in their entirety.

### Technical Field

The present application relates to the field of intelligent cleaning, and in particular, to a rolling brush assembly for a sweeping robot and a sweeping robot.

### Background

The sweeping robot includes a mobile chassis, a rolling brush assembly, a suction member, and a dust collection member such as a rigid dust collection box or a flexible dust collection bag, wherein the rolling brush assembly can use a cleaning brush extending radially from a rotating main shaft to perform a sweeping operation on an area below the mobile chassis.

Discrete contaminants such as dust and food crumbs can be swept into the interior of the sweeping robot by the cleaning brush and conveyed into the dust collection member by a suction airflow generated by the suction member within the interior of the sweeping robot. However, filament-shaped dirt such as hair may be entangled with the rolling brush assembly, so that they cannot be conveyed into the dust collection member by the suction airflow generated by the suction member.

For filament-shaped dirt, the prior art attempts to provide a static cutting edge in the peripheral area of the cleaning brush and cause the cleaning brush to interfere and collide with the static cutting edge during rotation, hoping that the filament-shaped dirt attached to the cleaning brush can be cut into easily suctioned fragments by contacting the static cutting edge during the interference and collision process.

However, the cutting force applied on the filament-shaped dirt when contacting the static cutting edge is limited, so there is a probability that filament-shaped dirt attached to the end of the brush cannot be cut at one time. Moreover, the interference and collision of the cleaning brush with the static cutting edge only occurs at the peripheral end of the brush. Therefore, if the filament-shaped dirt attached to the end of the brush gradually tightens and winds towards the rotating main shaft before being cut, it will not be able to contact the static cutting edge again with the interference and collision of the cleaning brush with the static cutting edge, and may be eventually wound around the outer shaft wall of the rotating main shaft.

Thus, during the cleaning and maintenance process of the sweeping robot, it is necessary to manually clean the filament-shaped dirt wound around the outer shaft wall of the rotating main shaft, which not only has low cleaning efficiency and high cleaning difficulty, but also affects user experience.

Evidently, how to automatically clean the filament-shaped dirt wound around the outer shaft wall of the rotating main shaft has become a technical problem to be solved in the prior art.

### Summary

In the embodiments of the present application, a rolling brush assembly for a sweeping robot and a sweeping robot are provided, which can automatically clean filament-shaped dirt wound around the outer shaft wall of the rotating main shaft.

A rolling brush assembly for a sweeping robot provided by an embodiment of the present application may include:
a rotating main shaft, wherein the rotating main shaft is installed with a cleaning brush extending radially from an outer shaft wall, the rotating main shaft further has a hollow shaft cavity and a mounting slit penetrating from the outer shaft wall to the hollow shaft cavity, the mounting slit extends along an axial direction of the rotating main shaft, and the mounting slit and the cleaning brush are arranged in a staggered configuration;
a cutting assembly, wherein the cutting assembly includes a fixed tooth row member fixedly inserted into the mounting slit and a movable tooth row member movably inserted into the mounting slit, the fixed tooth row member includes a plurality of fixed teeth protruding beyond the outer shaft wall, and the movable tooth row member includes a plurality of movable teeth protruding beyond the outer shaft wall;
a fixed shaft assembly, wherein the fixed shaft assembly is inserted into the hollow shaft cavity;
a moving member, wherein the moving member is movably installed within the hollow shaft cavity along the axial direction, and the moving member is in transmission connection with the fixed shaft assembly and the movable tooth row member;
wherein during rotation of the rotating main shaft driving the cleaning brush, the cutting assembly, and the moving member relative to the fixed shaft assembly, the transmission connection causes the moving member to generate reciprocating motion in the axial direction, and the reciprocating motion drives the movable teeth to perform a reciprocating staggered cutting motion relative to the fixed teeth in the axial direction.

In some examples, optionally, the rotating main shaft further includes a plurality of guide comb teeth distributed at intervals along the axial direction on the outer shaft wall, so as to form a guide channel spanning the mounting slit between every two adjacent guide comb teeth; the fixed teeth are aligned with the guide comb teeth in the axial direction; a motion stroke of the reciprocating staggered motion of the movable teeth relative to the fixed teeth is greater than a channel width of the guide channel in the axial direction.

In some examples, optionally, the guide comb teeth are distributed at intervals at slit edges on opposite sides of the mounting slit in a slit width direction.

In some examples, optionally, the guide comb teeth have comb tooth side walls flush with the slit edges; the fixed teeth abut against the comb tooth side walls of the guide comb teeth at the slit edge on one side of the mounting slit; and the movable teeth are in sliding cooperation with the comb tooth side walls of the guide comb teeth at the slit edge on the other side of the mounting slit.

In some examples, optionally, the fixed tooth row member includes a fixed tooth installation strip fixed within the mounting slit, and the fixed teeth protrude beyond the outer shaft wall of the rotating main shaft from an outer side edge of the fixed tooth installation strip close to the outer shaft wall; the movable tooth row member includes a movable tooth installation strip movably installed within the mounting slit, and the movable teeth protrude beyond the outer shaft wall of the rotating main shaft from an outer side edge of the movable tooth installation strip close to the outer shaft wall; the movable tooth row member further includes a movable tooth transmission arm extending from an inner side edge of the movable tooth installation strip close to the hollow shaft cavity into the hollow shaft cavity, and the movable tooth transmission arm is in transmission connection with the moving member.

In some examples, optionally, the fixed tooth row member further includes a fixed tooth installation lug extending from an inner side edge of the fixed tooth installation strip close to the hollow shaft cavity into the hollow shaft cavity, and the fixed tooth installation strip is fixed within the mounting slit by a fixed connection of the fixed tooth installation lug with the rotating main shaft within the hollow shaft cavity; the movable tooth row member further includes a movable tooth hanging lug extending from an inner side edge of the movable tooth installation strip close to the hollow shaft cavity into the hollow shaft cavity, and the movable tooth installation strip is movably installed within the mounting slit by movable installing of the movable tooth hanging lug with the rotating main shaft along the axial direction within the hollow shaft cavity.

In some examples, optionally, the fixed tooth installation lug is provided with a circular hole, and the movable tooth hanging lug is provided with a long hole extending along the axial direction; the rotating main shaft further includes an installation boss located within the hollow shaft cavity, and the installation boss is used for threaded connection with an installation bolt passing through the circular hole and the long hole; wherein an insertion cooperation of the installation bolt with the circular hole causes the fixed tooth installation lug to be fixedly connected with the rotating main shaft within the hollow shaft cavity, and a sliding cooperation of the installation bolt with the long hole causes the movable tooth hanging lug to be movably assembled with the rotating main shaft along the axial direction within the hollow shaft cavity.

In some examples, optionally, the moving member is fixedly engaged with the rotating main shaft in a rotation direction of the rotating main shaft relative to the fixed shaft assembly, so as to constrain the moving member to rotate synchronously with the rotating main shaft.

In some examples, optionally, the rotating main shaft further includes a sliding keyway located within the hollow shaft cavity; the moving member has a radial convex key inserted into the sliding keyway; a relative position of the radial convex key and the sliding keyway in the rotation direction of the rotating main shaft relative to the fixed shaft assembly are fixed, and the sliding keyway provides a cooperation allowance for sliding of the radial convex key in the axial direction.

In some examples, optionally, the rotating main shaft further includes a liner column shell fixed within the hollow shaft cavity, and the sliding keyway is provided on a column side wall of the liner column shell; the moving member includes a transmission slider located within a shell cavity of the liner column shell, and the radial convex key is protruded from a first slider side wall of the transmission slider facing the sliding keyway.

In some examples, optionally, the movable tooth row member further includes a movable tooth transmission arm extending into the hollow shaft cavity; the moving member achieves transmission connection with the movable tooth row member by a fixed engagement on the movable tooth transmission arm in the axial direction, the fixed engagement constrains the movable tooth transmission arm such that: in response to the reciprocating motion of the moving member, the cutting motion of the movable teeth is triggered.

In some examples, optionally, the moving member has an engagement groove, the movable tooth transmission arm is inserted into the engagement groove, a relative position of the engagement groove and the movable tooth transmission arm in the axial direction are fixed, and a groove width dimension of the engagement groove in a direction perpendicular to the axial direction has an expansion allowance relative to the movable tooth transmission arm.

In some examples, optionally, the rotating main shaft further includes a liner column shell fixed within the hollow shaft cavity, and a shell cavity of the liner column shell is communicated with the mounting slit; the moving member includes a transmission slider located within the shell cavity of the liner column shell, and the engagement groove is located on a second slider side wall of the transmission slider facing the mounting slit.

In some examples, optionally, the moving member and the fixed shaft assembly achieve transmission connection through eccentric contact, and a contact position of the eccentric contact is offset from a rotation axis of the rotating main shaft relative to the fixed shaft assembly.

In some examples, optionally, the moving member includes an inclined turntable, the inclined turntable is inclined relative to the rotation axis, and a turntable center of the inclined turntable is arranged coaxially with the rotation axis; the fixed shaft assembly has an eccentric protrusion offset from the rotation axis, and the eccentric protrusion contacts a turntable edge of the inclined turntable; wherein the inclined turntable is configured to, in response to a change in contact position between the turntable edge and the eccentric protrusion during the rotation, generate the reciprocating motion.

In some examples, optionally, the fixed shaft assembly includes a fixed shaft body and a cylindrical sleeve box, the fixed shaft body has a rotation-locking shaft end located outside the hollow shaft cavity and a guiding shaft end inserted into the hollow shaft cavity, and the cylindrical sleeve box is fixedly installed on the guiding shaft end; the eccentric protrusion includes a shaft-end arc surface boss located on an end surface of the guiding shaft end and a sleeve-box arc surface block located on an inner wall of a box cavity of the cylindrical sleeve box; the inclined turntable is located in the cylindrical sleeve box, and during the rotation: a first position area of the turntable edge of the inclined turntable contacts the shaft-end arc surface boss, so as to cause the moving member to undergo a first translation in the axial direction away from the fixed shaft assembly; a second position area of the turntable edge of the inclined turntable contacts the sleeve-box arc surface block, so as to cause the moving member to undergo a second translation in the axial direction towards the fixed shaft assembly; a starting position of the first position area and an ending position of the second position area are both a first edge position of the turntable edge that is farthest from the guiding shaft end in the axial direction; an ending position of the first position area and a starting position of the second position area are both a second edge position of the turntable edge that is closest to the guiding shaft end in the axial direction.

In some examples, optionally, the moving member and the fixed shaft assembly achieve transmission connection through screwing cooperation, and a screwing axis of the screwing cooperation is inclined relative to the axial direction.

In some examples, optionally, the moving member includes a guide rotating shaft, the guide rotating shaft has an inclined annular groove, a central axis of the inclined annular groove is inclined relative to the axial direction, and the screwing axis of the screwing cooperation coincides with the central axis of the inclined annular groove; the fixed shaft assembly includes an inner sleeve and a guiding ball, the inner sleeve is provided with a ball accommodating through hole penetrating a sleeve wall, the guiding ball is rollably accommodated in the ball accommodating through hole and has spherical cooperation with the inclined annular groove covered by the inner sleeve; wherein the spherical cooperation between the guiding ball and the inclined annular groove is used for guiding screwing of the moving member relative to the fixed shaft assembly, and the moving member is configured to, in response to a change in spherical cooperation position between the guiding ball and the inclined annular groove, generate the reciprocating motion.

In some examples, optionally, the fixed shaft assembly further includes an outer sleeve, and the outer sleeve is sleeved outside the inner sleeve and covers the guiding ball.

In some examples, optionally, the moving member further includes a transmission slider for transmission connection with the movable tooth row member and fixed engagement with the rotating main shaft in the rotation direction of the rotating main shaft relative to the fixed shaft assembly; the transmission slider is located outside the cylindrical sleeve box, the moving member further includes a connecting shaft rod, and the connecting shaft rod penetrates the cylindrical sleeve box and is connected between the turntable center of the inclined turntable and the transmission slider.

In some examples, optionally, the rotating main shaft includes at least two mounting slits arranged spaced apart by a preset phase interval; the cutting assembly includes at least two sets of the fixed tooth row member and the movable tooth row member, each set of the fixed tooth row member and the movable tooth row member is inserted into a respective mounting slit.

In some examples, optionally, the rotating main shaft includes a first semi-cylindrical shell and a second semi-cylindrical shell, cylindrical surfaces of the first semi-cylindrical shell and the second semi-cylindrical shell are complementary to each other, the first semi-cylindrical shell and the second semi-cylindrical shell are spliced together by snap-fit engagement, a pair of cleaning brushes are fixedly clamped by seams between the first semi-cylindrical shell and the second semi-cylindrical shell, and the hollow shaft cavity is surrounded by the first semi-cylindrical shell and the second semi-cylindrical shell; the rotating main shaft includes two mounting slits respectively provided on the first semi-cylindrical shell and the second semi-cylindrical shell, a phase interval between the two mounting slits is 180°, and the two mounting slits are located in a symmetry plane between the pair of cleaning brushes.

A sweeping robot provided by an embodiment of the present application may include a mobile chassis, an integrated cavity shell carried on the mobile chassis, and the rolling brush assembly according to the foregoing embodiments, the rolling brush assembly is installed in the integrated cavity shell, wherein:
the mobile chassis has a chassis opening, the integrated cavity shell has a sweeping window exposed at the chassis opening and a suction window for communicating with a dust collection mechanism, an installation position of the rolling brush assembly in the integrated cavity shell causes the cleaning brush to extend out of the sweeping window during the rotation to perform a sweeping operation;
the integrated cavity shell is fixedly installed with a driving motor, a first shaft end of the rotating main shaft is in transmission connection with the driving motor, the fixed shaft assembly is inserted into the hollow shaft cavity of the rotating main shaft from a second shaft end opposite to the first shaft end, and the fixed shaft assembly is fixed in the integrated cavity shell.

Based on the above embodiments, the rotating main shaft of the rolling brush assembly may have a hollow shaft cavity and a mounting slit penetrating from the outer shaft wall to the hollow shaft cavity, wherein the mounting slit is inserted with a fixed tooth row member and a movable tooth row member, and a moving member is arranged within the hollow shaft cavity. Based on the transmission connection between the moving member and the fixed shaft assembly inserted into the hollow inner cavity, the moving member can be reciprocated along the axial direction during rotation of the rotating main shaft relative to the fixed shaft assembly, and based on the transmission connection between the moving member and the movable tooth row member, the reciprocating motion of the moving member can cause the movable teeth of the movable tooth row member to perform a reciprocating staggered cutting motion relative to the fixed teeth of the fixed tooth row member. Therefore, through the reciprocating staggered cutting motion of the movable teeth protruding beyond the outer shaft wall relative to the fixed teeth, the rolling brush assembly can have the ability to autonomously perform active cutting on filament-shaped dirt wound around the outer shaft wall of the rotating main shaft, that is, to automatically clean the filament-shaped dirt. Thereby, it helps to improve the cleaning efficiency for filament-shaped dirt, reduce the cleaning difficulty for filament-shaped dirt, and thus enhance user experience.

### Brief Description of the Drawings

The accompanying drawings described herein are used to provide a further understanding of the present application and constitute a part of the present application. The schematic embodiments and their descriptions are used to explain the present application and do not constitute an improper limitation to the present application.
FIG. 1 is a schematic structural view of a rolling brush assembly for a sweeping robot according to an embodiment of the present application in a disassembled state;
FIG. 2 is a schematic structural view of a rolling brush assembly for a sweeping robot according to an embodiment of the present application in an assembled state from a first perspective;
FIG. 3 is a schematic structural view of a rolling brush assembly for a sweeping robot according to an embodiment of the present application in an assembled state from a second perspective;
FIG. 4 is a cross-sectional view of a rolling brush assembly for a sweeping robot according to an embodiment of the present application in an assembled state;
FIG. 5 is a partial schematic structural view of a rotating main shaft of a rolling brush assembly for a sweeping robot according to an embodiment of the present application;
FIG. 6 is a schematic structural view of a moving member of a rolling brush assembly for a sweeping robot according to an embodiment of the present application;
FIG. 7 is a schematic view of an assembly relationship between a moving member and a rotating main shaft of a rolling brush assembly for a sweeping robot according to an embodiment of the present application;
FIG. 8 is a schematic view of an assembly relationship between a moving member and a fixed shaft assembly of a rolling brush assembly for a sweeping robot according to an embodiment of the present application;
FIG. 9 is a partial schematic structure view of an assembly of a moving member and a fixed shaft assembly of a rolling brush assembly for a sweeping robot according to an embodiment of the present application;
FIG. 10 is a schematic structural view of an alternative for a moving member and a fixed shaft assembly of a rolling brush assembly for a sweeping robot according to an embodiment of the present application;
FIG. 11 is a partial schematic structural view of a sweeping robot according to an embodiment of the present application;
FIG. 12 is a schematic structural view of an integrated cavity shell of a sweeping robot according to an embodiment of the present application;
FIG. 13 is a schematic diagram of a docking structure between the integrated cavity shell as shown in FIG. 12 and a dust collection member.

### Description of Reference Numbers

10 rotating main shaft; 100 hollow shaft cavity; 11 first semi-cylindrical shell; 12 second semi-cylindrical shell; 13 limit end cover; 14 drive end cover; 15 mounting slit; 16 installation boss; 17 guide comb teeth; 18 liner column shell; 180 sliding keyway; 181 liner shell segment; 182 half-groove notch; 191 screwing hole seat; 192 screwing connection protrusion; 20 fixed shaft assembly; 21 fixed shaft body; 210 ball accommodating through hole; 211 rotation-locking shaft end; 212 guiding shaft end; 213 limit through hole; 219 avoidance annular groove; 22 cylindrical sleeve box; 221 semi-cylindrical box body; 222 semi-cylindrical box cover; 223 limit hole column; 23 eccentric protrusion; 231 shaft-end arc surface boss; 232 sleeve-box arc surface block; 21' inner sleeve; 22' guiding ball; 23' outer sleeve; 30 moving member; 31 transmission slider; 311 radial convex key; 315 engagement groove; 32 inclined turntable; 32' guide rotating shaft; 320 inclined annular groove; 33 connecting shaft rod; 40 cleaning brush; 50 cutting assembly; 51 fixed tooth row member; 510 fixed teeth; 511 fixed tooth installation strip; 512 fixed tooth installation lug; 52 movable tooth row member; 520 movable teeth; 521 movable tooth installation strip; 522 movable tooth hanging lug; 523 movable tooth transmission arm; 53 installation bolt; 60 integrated cavity shell; 600 rolling brush cavity; 61 sweeping window; 62 suction window; 63 support shaft base; 64 power shaft base; 65 rotation-locking notch; 66 channel assembly; 70 mobile chassis; 700 chassis opening; 81 driving motor; 82 speed reduction mechanism; 90 filament-shaped dirt.

### Detailed Description of the Embodiments

To make the objectives, technical solutions, and advantages of the present invention clearer, the present application will be further described in detail below with reference to the accompanying drawings and embodiments. Obviously, the described embodiments are only some of the embodiments of the present application, not all of them. All other embodiments obtained by those skilled in the art based on the embodiments of the present invention fall within the protection scope of the present application.

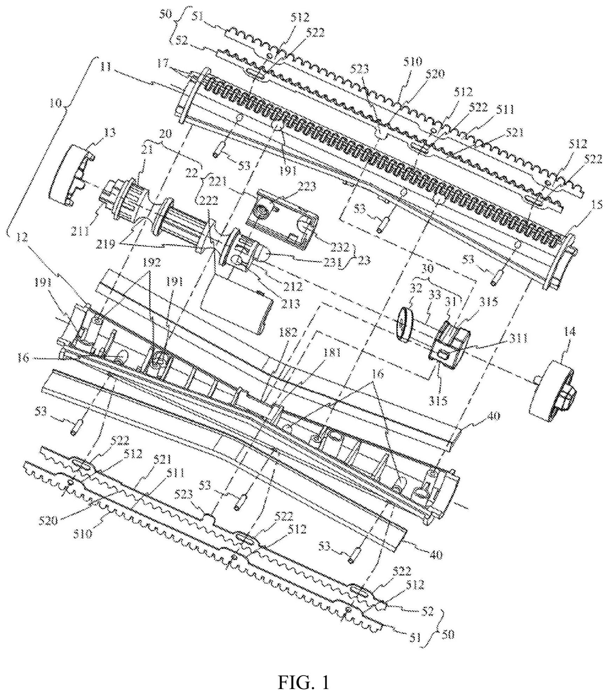

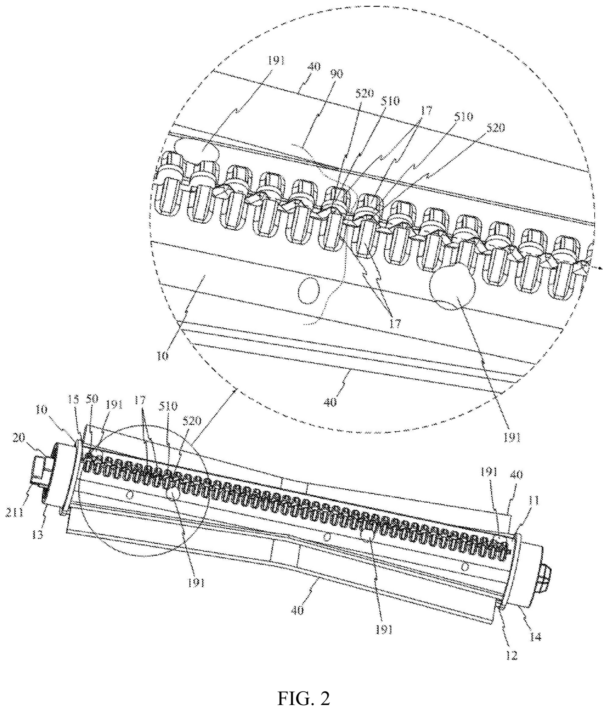

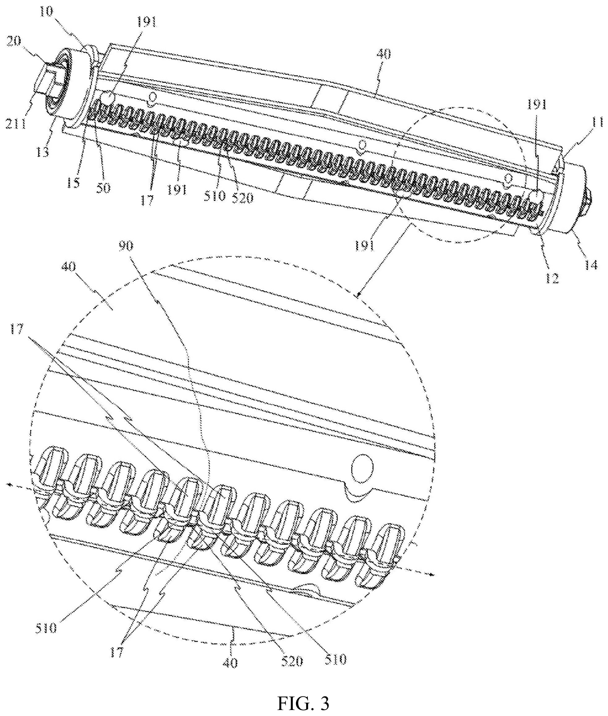

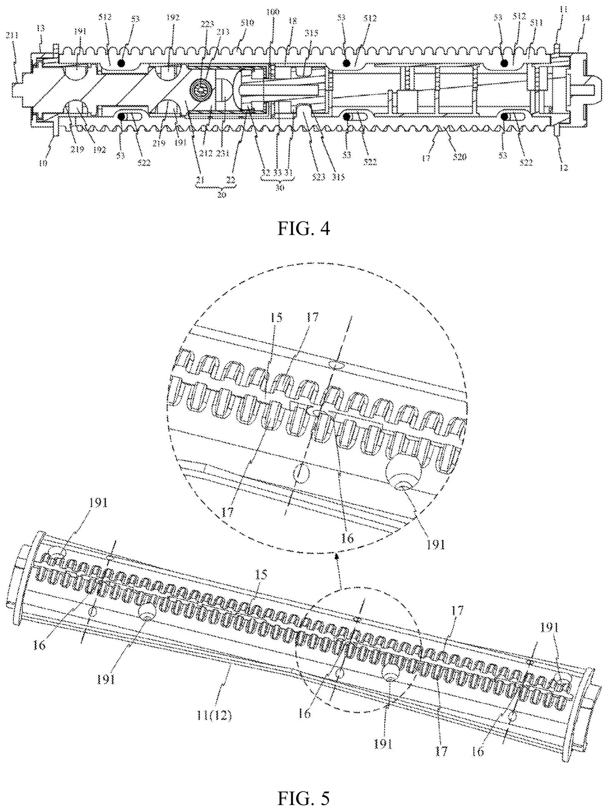

FIG. 1 is a schematic structural view of a rolling brush assembly for a sweeping robot according to an embodiment of the present application in a disassembled state. FIG. 2 is a schematic structural view of a rolling brush assembly for a sweeping robot according to an embodiment of the present application in an assembled state from a first perspective. FIG. 3 is a schematic structural view of a rolling brush assembly for a sweeping robot according to an embodiment of the present application in an assembled state from a second perspective. FIG. 4 is a cross-sectional view of a rolling brush assembly for a sweeping robot according to an embodiment of the present application in an assembled state. Referring to FIG. 1 to FIG. 4, in an embodiment of the present application, a rolling brush assembly for a sweeping robot may include a rotating main shaft 10, a cutting assembly 50, a fixed shaft assembly 20, and a moving member 30.

The rotating main shaft 10 may be installed with a cleaning brush 40 extending radially from an outer shaft wall, and the rotating main shaft 10 further has a hollow shaft cavity 100 (please pay special attention to FIG. 4) and a mounting slit 15 penetrating from the outer shaft wall to the hollow shaft cavity 100, wherein the mounting slit 15 extends along an axial direction of the rotating main shaft 10, and the mounting slit 15 and the cleaning brush 40 are arranged in a staggered configuration.

The cutting assembly 50 includes a fixed tooth row member 51 fixedly inserted into the mounting slit 15 and a movable tooth row member 52 movably inserted into the mounting slit 15, the fixed tooth row member 51 includes a plurality of fixed teeth 510 protruding beyond the outer shaft wall, and the movable tooth row member 52 includes a plurality of movable teeth 520 protruding beyond the outer shaft wall;
the fixed shaft assembly 20 is inserted into the hollow shaft cavity 100;
the moving member 30 is movably installed within the hollow shaft cavity 100 along the axial direction, and the moving member 30 is in transmission connection with the fixed shaft assembly 20 and the movable tooth row member 52;
wherein during rotation of the rotating main shaft 10 driving the cleaning brush 40, the cutting assembly 50, and the moving member 30 relative to the fixed shaft assembly 20, the transmission connection causes the moving member 30 to generate reciprocating motion in the axial direction, and the reciprocating motion drives the movable teeth 520 to perform a reciprocating staggered cutting motion relative to the fixed teeth 510 in the axial direction.

In the illustrated embodiment of the present application, as an example, the rotating main shaft 10 includes a first semi-cylindrical shell 11 and a second semi-cylindrical shell 12, wherein cylindrical surfaces of the first semi-cylindrical shell 11 and the second semi-cylindrical shell 12 are complementary to each other, and the first semi-cylindrical shell 11 and the second semi-cylindrical shell 12 are spliced together by snap-fit engagement. For example, the splicing of the first semi-cylindrical shell 11 and the second semi-cylindrical shell 12 by snap-fit engagement can be achieved by snap-fit engagement at cylindrical surface edges and/or screw locking fixation. The illustrated embodiment of the present application shows that the first semi-cylindrical shell 11 and the second semi-cylindrical shell 12 each have a screwing hole seat 191 through which a screw can pass and a screwing connection protrusion 192 with which a screw can threadedly connect. The screwing hole seat 191 of the first semi-cylindrical shell 11 can be positioned and docked with the screwing connection protrusion 192 of the second semi-cylindrical shell 12. Similarly, the screwing hole seat 191 of the second semi-cylindrical shell 12 can also be positioned and docked with the screwing connection protrusion 192 of the first semi-cylindrical shell 11. Thus, through the positioning and docking of the screwing hole seat 191 and the screwing connection protrusion 192 formed at different positions of the first semi-cylindrical shell 11 and the second semi-cylindrical shell 12, and through the fixed installation of the screw in each pair of the positioned and docked screwing hole seat 191 and screwing connection protrusion 192, the fixation of the splicing of the first semi-cylindrical shell 11 and the second semi-cylindrical shell 12 by snap-fit engagement can be achieved.

In this case, a pair of seams between the first semi-cylindrical shell 11 and the second semi-cylindrical shell 12 can respectively fixedly clamp a pair of the cleaning brushes 40. As can be seen from the illustrated embodiment of the present application, the seams between the first semi-cylindrical shell 11 and the second semi-cylindrical shell 12 are not limited to a straight line shape, but can be set to a polyline shape, so that the cleaning brushes 40 in elongated shape are constrained by the polyline-shaped seams between the first semi-cylindrical shell 11 and the second semi-cylindrical shell 12 into a bent shape. Such a bent shape can, during the rotation of the rotating main shaft 10, promote the discrete contaminants swept by the cleaning brushes 40 to converge towards the central area of the elongated shape.

For the rotating main shaft 10 including the first semi-cylindrical shell 11 and the second semi-cylindrical shell 12, the hollow shaft cavity 100 is surrounded by the first semi-cylindrical shell 11 and the second semi-cylindrical shell 12, that is, the hollow shaft cavity 100 of the rotating main shaft 10 may include two semi-cylindrical cavities of the first semi-cylindrical shell 11 and the second semi-cylindrical shell 12 which are communicated with each other, and the mounting slit 15 of the rotating main shaft 10 may include two mounting slits 15 respectively provided on the first semi-cylindrical shell 11 and the second semi-cylindrical shell 12. Preferably, when the first semi-cylindrical shell 11 and the second semi-cylindrical shell 12 are spliced with each other by snap-fit engagement in an assembled state, a phase interval between the two mounting slits 15 is 180°, and the two mounting slits 15 are located in a symmetry plane between the pair of the cleaning brushes 40.

It can be understood that the embodiment of the present application does not intend to impose unnecessary limitations on the composition of the shaft body of the rotating main shaft 10, that is, the shaft body of the rotating main shaft 10 is not limited to one physical form formed by splicing of the first semi-cylindrical shell 11 and the second semi-cylindrical shell 12 by snap-fit engagement, but can adopt any physical form that can support the fixed installation of the cleaning brush 40 and has the hollow shaft cavity 100 and the mounting slit 15.

Moreover, the embodiment of the present application does not intend to limit the number of cleaning brushes 40 and mounting slits 15, that is: if the cleaning brushes 40 are not fixedly clamped by the seams between the first semi-cylindrical shell 11 and the second semi-cylindrical shell 12, the number of cleaning brushes 40 may not be limited to two; and only one of the first semi-cylindrical shell 11 and the second semi-cylindrical shell 12 may be provided with the mounting slit 15, or the number of mounting slits 15 provided on the first semi-cylindrical shell 11 and/or the second semi-cylindrical shell 12 may be more than one. Therefore, the number of mounting slits 15 of the rotating main shaft 10 may also not be limited to two, but may also be one, or other numbers more than two.

As shown in FIG. 1, the cutting assembly 50 includes the fixed tooth row member 51 fixedly inserted into the mounting slit 15 and the movable tooth row member 52 movably inserted into the mounting slit 15, wherein the fixed tooth row member 51 and the movable tooth row member 52 can be rotated synchronously with the rotating main shaft 10, the fixed tooth row member 51 and the movable tooth row member 52 can be constrained by the slit width dimension of the mounting slit 15 in the rotation direction of the rotating main shaft 10 to be adjacently stacked, the fixed tooth row member 51 can include the plurality of fixed teeth 510 protruding beyond the outer shaft wall of the rotating main shaft 10 at the respective mounting slit 15, the movable tooth row member 52 can include the plurality of movable teeth 520 protruding beyond the outer shaft wall of the rotating main shaft 10 at the respective mounting slit 15, and fixed tooth gaps between the plurality of fixed teeth 510 and movable tooth gaps between the plurality of movable teeth 520 can be the same, or can be different as shown in the illustrated embodiment of the present application.

In an embodiment of the present application, the fixed tooth row member 51 may include a fixed tooth installation strip 511 fixed within the mounting slit 15. For example, as shown in FIG. 1, the rotating main shaft 10 may further include an installation boss 16 located within the hollow shaft cavity 100, the installation boss 16 is used for threaded connection with an installation bolt 53 extending into the hollow inner cavity 100, the fixed tooth row member 51 may further include a fixed tooth installation lug 512 extending from an inner side edge of the fixed tooth installation strip 511 close to the hollow shaft cavity 100 into the hollow shaft cavity 100, the fixed tooth installation lug 512 may be provided with a circular hole adapted to the installation bolt 53, the installation bolt 53 can pass through the circular hole of the fixed tooth installation lug 512, and the insertion cooperation of the installation bolt 53 with the circular hole of the fixed tooth installation lug 512 causes the fixed tooth installation lug 512 to be fixedly connected with the rotating main shaft 10 within the hollow shaft cavity 100. Thus, the fixed tooth installation strip 511 can be fixed within the mounting slit 15 by the fixed connection of the fixed tooth installation lug 512 with the rotating main shaft 10 within the hollow shaft cavity 100. In addition, the fixed teeth 510 may protrude beyond the outer shaft wall of the rotating main shaft 10 from an outer side edge of the fixed tooth installation strip 511 close to the outer shaft wall of the rotating main shaft 10.

In an embodiment of the present application, as shown in FIG. 1, the movable tooth row member 52 may include a movable tooth installation strip 521 movably installed within the mounting slit 15. For example, the movable tooth row member 52 may further include a movable tooth hanging lug 522 extending from an inner side edge of the movable tooth installation strip 521 close to the hollow shaft cavity 100 into the hollow shaft cavity 100, the movable tooth hanging lug 522 is provided with a long hole extending along the axial direction of the rotating main shaft 10 (i.e., the extension direction of the mounting slit 15), the aforementioned installation bolt 53 can also pass through the long hole of the movable tooth hanging lug 522, and the sliding cooperation of the installation bolt 53 with the long hole of the movable tooth hanging lug 522 causes the movable tooth hanging lug 522 to be movably assembled with the rotating main shaft 10 along the axial direction within the hollow shaft cavity 100. Thus, the movable tooth installation strip 521 can be movably installed within the mounting slit 15 by the movable installing of the movable tooth hanging lug 522 with the rotating main shaft 10 along the axial direction within the hollow shaft cavity 100. In addition, the movable teeth 520 may protrude beyond the outer shaft wall of the rotating main shaft 10 from an outer side edge of the movable tooth installation strip 521 close to the outer shaft wall of the rotating main shaft 10.

For the case where the first semi-cylindrical shell 11 and the second semi-cylindrical shell 12 are each provided with one mounting slit 15, the cutting assembly 50 may include two sets of the fixed tooth row member 51 and the movable tooth row member 52, and each set of the fixed tooth row member 51 and the movable tooth row member 52 is inserted into the respective mounting slit 15. If the phase interval between the two mounting slits 15 is 180° and the two mounting slits 15 are located in the symmetry plane between the pair of the cleaning brushes 40, then the phase interval between the two sets of the fixed tooth row member 51 and the movable tooth row member 52 is 180°, and each set of the fixed tooth row member 51 and the movable tooth row member 52 may have a phase interval of approximately 90° with each cleaning brush 40.

That is, the cutting assembly 50 may include the fixed tooth row members 51 and the movable tooth row members 52 equal in number to the mounting slits 15. Since the number of mounting slits 15 of the rotating main shaft 10 is not limited to two, the number of sets of the fixed tooth row member 51 and the movable tooth row member 52 included in the cutting assembly 50 is also not limited to two. Preferably, the rotating main shaft 10 includes at least two mounting slits 15 arranged spaced apart by a preset phase interval (for example, 180°, or any angle value between 90° and 180°), and the cutting assembly 50 includes at least two sets of the fixed tooth row member 51 and the movable tooth row member 52.

As shown in FIG. 1 to FIG. 4, the fixed shaft assembly 20 is inserted into the hollow shaft cavity 100 of the rotating main shaft 10, wherein the insertion cooperation of the fixed shaft assembly 20 within the hollow shaft cavity 100 of the rotating main shaft 10 causes a limit constraint between the fixed shaft assembly 20 and the rotating main shaft 10 in the axial direction, and there is no constraint between the fixed shaft assembly 20 and the rotating main shaft 10 in the rotation direction of the rotating main shaft 10.

Specifically, the rotating main shaft 10 may have a first shaft end for transmission connection with a driving motor. For example, the first shaft end of the rotating main shaft 10 may be fixedly installed with a drive end cover 14 for transmission connection with the driving motor. Thus, the rotating main shaft 10 can rotate in response to the power output generated by the driving motor.

Furthermore, a second shaft end of the rotating main shaft 10 opposite to the first shaft end can be rotatably supported by the fixed shaft assembly 20, that is, the fixed shaft assembly 20 can be inserted into the hollow shaft cavity 100 of the rotating main shaft 10 from the second shaft end opposite to the first shaft end, the fixed shaft assembly 20 can have a rotation-locking shaft end 211 located outside the second shaft end of the rotating main shaft 10, and by rotation-locking constraint on this rotation-locking shaft end 211, the fixed shaft assembly 20 can be prevented from rotating with the rotating main shaft 10. In addition, to prevent positional deviation along the axial direction between the fixed shaft assembly 20 and the rotating main shaft 10, the second shaft end of the rotating main shaft 10 can be installed with a limit end cover 13, and the rotation-locking shaft end 211 of the fixed shaft assembly 20 can pass through the limit end cover 13 and be located outside the second shaft end of the rotating main shaft 10.

As shown in FIG. 1 and FIG. 4, the moving member 30 is movably installed within the hollow shaft cavity 100 of the rotating main shaft 10 along the axial direction of the rotating main shaft 10. The moving member 30 is constrained to be able to rotate synchronously with the rotating main shaft 10, for example, the moving member 30 is fixedly engaged with the rotating main shaft 10 in the rotation direction of the rotating main shaft 10 relative to the fixed shaft assembly 20, so as to constrain the moving member 30 to rotate synchronously with the rotating main shaft 10; and the moving member 30 is in transmission connection with the fixed shaft assembly 20 and the movable tooth row member 52.

For example, the moving member 30 can be in transmission connection with the inner portion of the fixed shaft assembly 20 located within the hollow shaft cavity 100.

Also for example, the movable tooth row member 52 may further include a movable tooth transmission arm 523 extending from an inner side edge of the movable tooth installation strip 521 close to the hollow shaft cavity 100 into the hollow shaft cavity 100, and the moving member 30 can achieve transmission connection with the movable tooth row member 52 by a fixed engagement on the movable tooth transmission arm 523 in the axial direction of the rotating main shaft 10.

For the rotating main shaft 10 including the first semi-cylindrical shell 11 and the second semi-cylindrical shell 12, the fixed shaft assembly 20 and the moving member 30 can be pre-assembled with either the first semi-cylindrical shell 11 or the second semi-cylindrical shell 12 when the first semi-cylindrical shell 11 and the second semi-cylindrical shell 12 are in a separated and disassembled state, and then the assembly within the hollow shaft cavity 100 of the rotating main shaft 10 is completed through the splicing of the first semi-cylindrical shell 11 and the second semi-cylindrical shell 12 by snap-fit engagement.

During the rotation of the rotating main shaft 10 driving the cleaning brush 40, the cutting assembly 50, and the moving member 30 relative to the fixed shaft assembly 20, the transmission connection between the moving member 30 and the fixed shaft assembly 20 and the movable tooth row member 52 can cause: the moving member 30 to generate reciprocating motion in the axial direction of the rotating main shaft 10, and the moving member 30 to drive the movable teeth 520 to perform a reciprocating staggered cutting motion relative to the fixed teeth 510 in the axial direction of the rotating main shaft 10 through this reciprocating motion. For example, for each rotation of the rotating main shaft 10, the moving member 30 may undergo one reciprocating motion and drive the movable teeth 520 to complete one reciprocating stagger relative to the fixed teeth 510.

Based on the above structure, the rotating main shaft 10 of the rolling brush assembly provided by the embodiments of the present application can have a hollow shaft cavity 100 and a mounting slit 15 penetrating from the outer shaft wall to the hollow shaft cavity 100, wherein the mounting slit 15 is inserted with a fixed tooth row member 51 and a movable tooth row member 52, and a moving member 30 is arranged within the hollow shaft cavity 100 of the rotating main shaft 10. Based on the transmission connection between the moving member 30 and the fixed shaft assembly 20 inserted into the hollow inner cavity 100 of the rotating main shaft 10, the moving member 30 can be reciprocated along the axial direction of the rotating main shaft 10 during the rotation of the rotating main shaft 10 relative to the fixed shaft assembly 20, and based on the transmission connection between the moving member 30 and the movable tooth row member 52, the reciprocating motion of the moving member 30 can cause the movable teeth 520 of the movable tooth row member 52 to perform a reciprocating staggered cutting motion relative to the fixed teeth 510 of the fixed tooth row member 51. Therefore, through the reciprocating staggered cutting motion of the movable teeth 520 protruding beyond the outer shaft wall of the rotating main shaft 10 relative to the fixed teeth 510, the rolling brush assembly can have the ability to autonomously perform active cutting on filament-shaped dirt 90 wound around the outer shaft wall of the rotating main shaft 10, that is, to automatically clean the filament-shaped dirt 90. Thereby, it helps to improve the cleaning efficiency for the filament-shaped dirt 90, reduce the cleaning difficulty for the filament-shaped dirt 90, and thus enhance user experience.

FIG. 5 is a partial schematic structural view of a rotating main shaft of a rolling brush assembly for a sweeping robot according to an embodiment of the present application. Referring to FIG. 5, in the embodiment of the present application, the rotating main shaft 10 may further include a plurality of guide comb teeth 17 distributed at intervals along the axial direction on the outer shaft wall, so as to form a guide channel spanning the mounting slit 15 between every two adjacent guide comb teeth 17. For example, the guide comb teeth 17 can be distributed at intervals at slit edges on opposite sides of the mounting slit 15 in a slit width direction.

In this case, the fixed teeth 510 are aligned with the guide comb teeth 17 in the axial direction, to avoid the fixed teeth 510 blocking the guide channel. For example, the guide comb teeth 17 can have comb tooth side walls flush with the slit edges, the fixed teeth 510 can abut against the comb tooth side walls of the guide comb teeth 17 at the slit edge on one side of the mounting slit 15, and the movable teeth 520 can be in sliding cooperation with the comb tooth side walls of the guide comb teeth 17 at the slit edge on the other side of the mounting slit 15.

A motion stroke of the reciprocating staggered motion of the movable teeth 520 relative to the fixed teeth 510 can be greater than a channel width of the guide channel in the axial direction of the rotating main shaft 10. Preferably, the motion stroke can be greater than the sum of the comb tooth width of the guide comb teeth 17 in the axial direction of the rotating main shaft 10 and the channel widths of two guide channels.

Please refer back to FIG. 2 and FIG. 3 while referring to FIG. 5. Based on the guide channels formed by the guide comb teeth 17, the filament-shaped dirt 90 can span the mounting slit 15 in an orientation perpendicular to the mounting slit 15, so that the filament-shaped dirt 90 is more easily cut by the movable teeth 520 performing the cutting motion along the mounting slit 15, thereby improving the cutting efficiency of the rolling brush assembly autonomously performing active cutting on the filament-shaped dirt 90 wound around the outer shaft wall of the rotating main shaft 10.

To better understand the driving principle of the transmission connection between the moving member 30 and the fixed shaft assembly 20 and the movable tooth row member 52 for the cutting motion of the movable teeth 520, examples of structures will be described below by way of illustration.

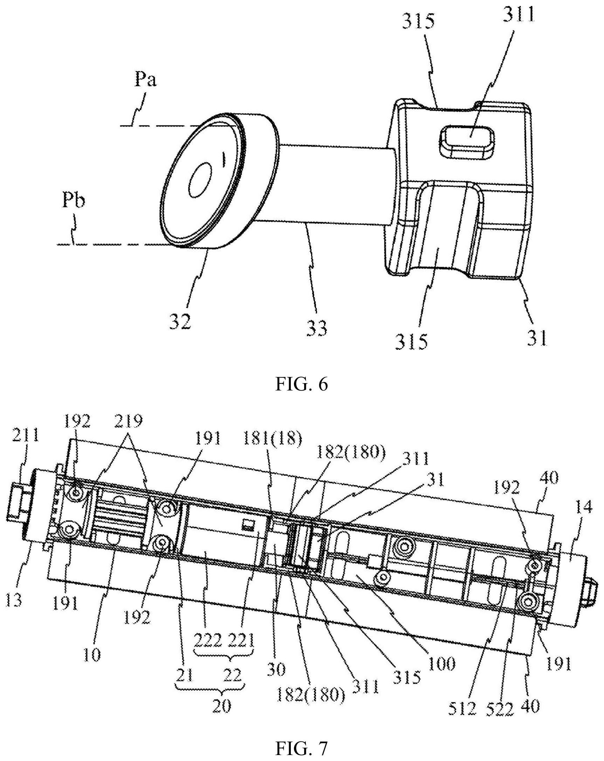

FIG. 6 is a schematic structural view of a moving member of a rolling brush assembly for a sweeping robot according to an embodiment of the present application. Referring to FIG. 6, in the embodiment of the present application, the moving member 30 may include a transmission slider 31, an inclined turntable 32, and a connecting shaft rod 33 connected between the transmission slider 31 and the inclined turntable 32.

The transmission slider 31 is used to achieve the synchronous rotation constraint between the moving member 30 and the rotating main shaft 10 and the transmission connection between the moving member 30 and the movable tooth row member 52. For example, the transmission slider 31 can have a radial convex key 311 for achieving the synchronous rotation constraint between the moving member 30 and the rotating main shaft 10, and an engagement groove 315 for achieving the transmission connection between the moving member 30 and the movable tooth row member 52.

The inclined turntable 32 is used to achieve transmission cooperation between the moving member 30 and the fixed shaft assembly 20.

FIG. 7 is a schematic view of an assembly relationship between a moving member and a rotating main shaft of a rolling brush assembly for a sweeping robot according to an embodiment of the present application. Referring to FIG. 7 and also referring back to FIG. 1 and FIG. 6, in the embodiment of the present application, the rotating main shaft 10 may further include a sliding keyway 180 located within the hollow shaft cavity 100, the radial convex key 311 of the moving member 30 can be inserted into the sliding keyway 180 of the rotating main shaft 10, the relative position of the radial convex key 311 and the sliding keyway 180 in the rotation direction of the rotating main shaft 10 relative to the fixed shaft assembly 20 are fixed, and the sliding keyway 180 provides a cooperation allowance for sliding of the radial convex key 311 in the axial direction of the rotating main shaft 10.

Thus, through the slidable insertion of the radial convex key 311 in the sliding keyway 180, the moving member 30 is fixedly engaged with the rotating main shaft 10 in the rotation direction of the rotating main shaft 10 relative to the fixed shaft assembly 20, so as to constrain the moving member 30 to rotate synchronously with the rotating main shaft 10.

Specifically, the rotating main shaft 10 may further include a liner column shell 18 fixed within the hollow shaft cavity 100, and the sliding keyway 180 can be provided on a column side wall of the liner column shell 18. In this case, the transmission slider 31 of the moving member 30 can be located within a shell cavity of the liner column shell 18, and the radial convex key 311 can protrude from a first slider side wall of the transmission slider 31 facing the sliding keyway 180.

For the rotating main shaft 10 including the first semi-cylindrical shell 11 and the second semi-cylindrical shell 12, the first semi-cylindrical shell 11 and the second semi-cylindrical shell 12 can each include a liner shell segment 181 having a half-groove notch 182, and when the first semi-cylindrical shell 11 and the second semi-cylindrical shell 12 are spliced together by snap-fit engagement in an assembled state, the liner shell segments 181 of the first semi-cylindrical shell 11 and the second semi-cylindrical shell 12 can be spliced together by snap-fit engagement to form the aforementioned liner column shell 18, and then the half-groove notches 182 can be docked to form the aforementioned sliding keyway 180.

Further, as previously mentioned, the movable tooth row member 52 may further include a movable tooth transmission arm 523 extending into the hollow shaft cavity 100. In this case, referring back to FIG. 1, FIG. 4, and FIG. 6, the movable tooth transmission arm 523 of the movable tooth row member 52 can be inserted into the engagement groove 315 of the moving member 30.

The relative position of the engagement groove 315 and the movable tooth transmission arm 523 in the axial direction of the rotating main shaft 10 are fixed, so that the moving member 30 can achieve transmission connection with the movable tooth row member 52 by a fixed engagement on the movable tooth transmission arm 523 in the axial direction of the rotating main shaft 10. This fixed engagement constrains the movable tooth transmission arm 523 such that: in response to the reciprocating motion of the moving member 30, the cutting motion of the movable teeth 520 is triggered.

Furthermore, a groove width dimension of the engagement groove 315 in a direction perpendicular to the axial direction of the rotating main shaft 10 has an expansion allowance relative to the movable tooth transmission arm 523, to prevent the movable tooth transmission arm 523 from detaching from the engagement groove 315 in the direction perpendicular to the axial direction of the rotating main shaft 10.

If the rotating main shaft 10 has the liner column shell 18 as described previously and the transmission slider 31 of the moving member 30 is located within the liner column shell 18, then the shell cavity of the liner column shell 18 is communicated with the mounting slit 15, and the engagement groove 315 is located on a second slider side wall of the transmission slider 31 facing the mounting slit 15. In the illustrated embodiment of the present application, taking the transmission slider 31 as a rectangular block as an example, in this case, the first slider side wall described previously and the second slider side wall described here can be two sets of mutually perpendicular wall surfaces of the rectangular block, respectively.

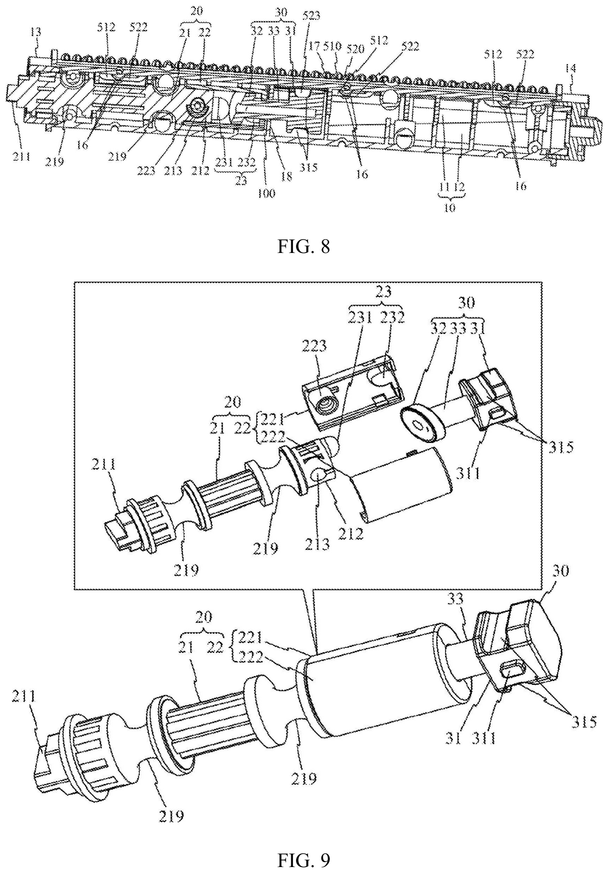

FIG. 8 is a schematic view of an assembly relationship between a moving member and a fixed shaft assembly of a rolling brush assembly for a sweeping robot according to an embodiment of the present application. FIG. 9 is a partial schematic view of an assembly of a moving member and a fixed shaft assembly of a rolling brush assembly for a sweeping robot according to an embodiment of the present application. Please pay attention to FIG. 8 and FIG. 9 while referring to FIG. 1 and FIG. 4. In the embodiment of the present application, the moving member 30 and the fixed shaft assembly 20 can achieve transmission connection through eccentric contact, and a contact position of the eccentric contact is offset from a rotation axis of the rotating main shaft 10 relative to the fixed shaft assembly 20.

Specifically, the inclined turntable 32 of the moving member 30 is inclined relative to the rotation axis of the rotating main shaft 10, and a turntable center of the inclined turntable 32 is arranged coaxially with the rotation axis of the rotating main shaft 10. That is, an axis of the connecting shaft rod 33 of the moving member 30 can coincide with the rotation axis of the rotating main shaft 10, the turntable center of the inclined turntable 32 can be arranged coaxially with the axis of the connecting shaft rod 33, and the inclined turntable 32 can be inclined relative to the axis of the connecting shaft rod 33.

In this case, the fixed shaft assembly 20 can have an eccentric protrusion 23 offset from the rotation axis, and the eccentric protrusion 23 contacts a turntable edge of the inclined turntable 32.

Thus, the inclined turntable 32 can be configured to, in response to a change in contact position between the turntable edge and the eccentric protrusion 23 during the rotation of the rotating main shaft 10 relative to the fixed shaft assembly 20, generate the reciprocating motion, thereby causing the moving member 30 including the inclined turntable 32 to undergo the reciprocating motion that triggers the cutting motion of the movable teeth 520.

In an embodiment of the present application, as a preferred solution, the fixed shaft assembly 20 may include a fixed shaft body 21 and a cylindrical sleeve box 22.

The fixed shaft body 21 has the rotation-locking shaft end 211 described previously located outside the hollow shaft cavity 100, and the fixed shaft body 21 further has a guiding shaft end 212 inserted into the hollow shaft cavity 100. In addition, an inner shaft segment of the fixed shaft body 21 located within the hollow shaft cavity 100 between the rotation-locking shaft end 211 and the guiding shaft end 212 may also have an avoidance annular groove 219 for avoiding the screwing hole seat 191 and the screwing connection protrusion 192.

The cylindrical sleeve box 22 is fixedly installed on the guiding shaft end 212 of the fixed shaft body 21, wherein the fixed installation of the cylindrical sleeve box 22 on the guiding shaft end 212 means that the relative position of the cylindrical sleeve box 22 and the guiding shaft end 212 in both the axial direction and the rotation direction are fixed. For example, the cylindrical sleeve box 22 may include a semi-cylindrical box body 221 and a semi-cylindrical box cover 222, the semi-cylindrical box body 221 and the semi-cylindrical box cover 222 can wrap the guiding shaft end 212 of the fixed shaft body 21 through buckle connection, the guiding shaft end 212 of the fixed shaft body 21 can have a limit through hole 213, and the cylindrical sleeve box 22 has a limit hole column 223 at least disposed on the semi-cylindrical box body 221. Thus, through a connecting member (such as a pin or a bolt) passing through the limit through hole 213 and the limit hole column 223, the relative position of the cylindrical sleeve box 22 and the guiding shaft end 212 in both the axial direction and the rotation direction can be fixed.

In this case, the eccentric protrusion 23 of the fixed shaft assembly 20 may include a shaft-end arc surface boss 231 located on an end surface of the guiding shaft end 212 of the fixed shaft body 21 and a sleeve-box arc surface block 232 located on an inner wall of a box cavity of the cylindrical sleeve box 22 (for example, the semi-cylindrical box body 221), and the inclined turntable 32 of the moving member 30 is located in the cylindrical sleeve box 22. For example, the inclined turntable 32 can be placed into the semi-cylindrical box body 221 when the semi-cylindrical box body 221 and the semi-cylindrical box cover 222 are separated, and then the inclined turntable 32 is enclosed in the cylindrical sleeve box 22 through the buckle engagement of the semi-cylindrical box body 221 and the semi-cylindrical box cover 222. In addition, the transmission slider 31 of the moving member 30 is located outside the cylindrical sleeve box 22, and the connecting shaft rod 33 of the moving member 30 penetrates the cylindrical sleeve box 22.

Based on the above structure, during the rotation of the rotating main shaft 10 driving the cleaning brush 40, the cutting assembly 50, and the moving member 30 relative to the fixed shaft assembly 20:
a first position area of the turntable edge of the inclined turntable 32 contacts the shaft-end arc surface boss 231, which can cause the moving member 30 to undergo a first translation in the axial direction of the rotating main shaft 10 away from the fixed shaft assembly 20;
a second position area of the turntable edge of the inclined turntable 32 contacts the sleeve-box arc surface block 232, which can cause the moving member 30 to undergo a second translation in the axial direction of the rotating main shaft 10 towards the fixed shaft assembly 20, that is, the second translation is opposite to the first translation.

As shown in FIG. 6, a starting position of the aforementioned first position area and an ending position of the aforementioned second position area can both be a first edge position Pa of the turntable edge of the inclined turntable 32 that is farthest from the guiding shaft end 212 in the axial direction of the rotating main shaft 10 (i.e., closest to the transmission slider 31 in the axial direction of the connecting shaft rod 33); and an ending position of the aforementioned first position area and a starting position of the aforementioned second position area can both be a second edge position Pb of the turntable edge of the inclined turntable 32 that is closest to the guiding shaft end 212 in the axial direction of the rotating main shaft 10 (i.e., farthest from the transmission slider 31 in the axial direction of the connecting shaft rod 33).

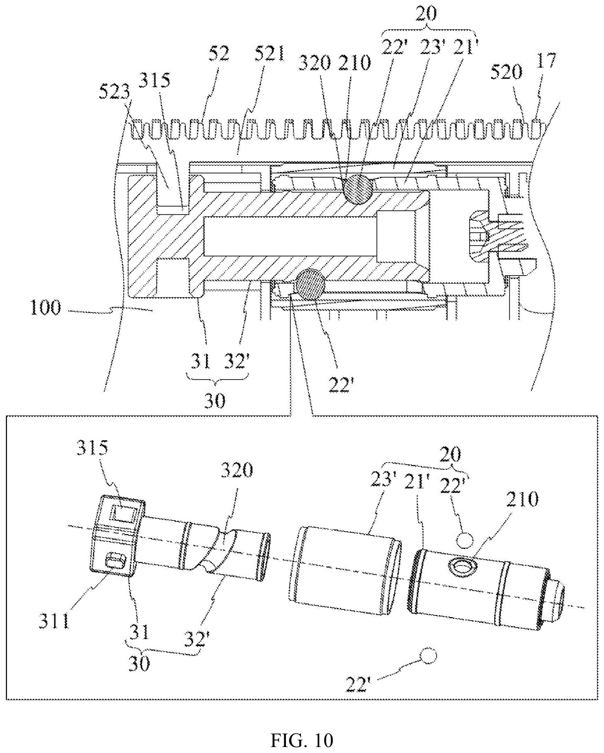

FIG. 10 is a schematic structural view of an alternative for a moving member and a fixed shaft assembly of a rolling brush assembly for a sweeping robot according to an embodiment of the present application. Referring to FIG. 10, in the embodiment of the present application, the moving member 30 and the fixed shaft assembly 20 can also achieve transmission connection through screwing cooperation, and a screwing axis of the screwing cooperation is inclined relative to the axial direction of the rotating main shaft 10.

Specifically, the moving member 30 may include a guide rotating shaft 32', the guide rotating shaft 32' can replace the inclined turntable 32 and the connecting shaft rod 33 described previously and be connected to the transmission slider 31 described previously. The guide rotating shaft 32' can have an inclined annular groove 320, a central axis of the inclined annular groove 320 is inclined relative to the axial direction of the rotating main shaft 10, and the screwing axis of the screwing cooperation between the moving member 30 and the fixed shaft assembly 20 can coincide with the central axis of the inclined annular groove 320.

Moreover, the fixed shaft assembly 20 may include an inner sleeve 21' and a guiding ball 22', the inner sleeve 21' can be connected to the second shaft end of the rotating main shaft 10 through a shaft rod not shown in the accompanying drawings and receive a rotation-locking constraint at the second shaft end, so that the inner sleeve 21' can remain stationary or in a rotation-locking state during the rotation of the rotating main shaft 10. The inner sleeve 21' is provided with a ball accommodating through hole 210 penetrating a sleeve wall, the guiding ball 22' is rollably accommodated in the ball accommodating through hole 210 and has spherical cooperation with the inclined annular groove 320 covered by the inner sleeve 21'.

Based on the above structure, the spherical cooperation between the guiding ball 22' and the inclined annular groove 320 is used for guiding screwing of the moving member 30 relative to the fixed shaft assembly 20, and the moving member 30 can be configured to, in response to a change in spherical cooperation position between the guiding ball 22' and the inclined annular groove 320, generate the reciprocating motion.

In addition, the fixed shaft assembly 20 may further include an outer sleeve 23', and the outer sleeve 23' can be sleeved outside the inner sleeve 21' and cover the guiding ball 22', to prevent the guiding ball 22' from detaching from the inclined annular groove 320 and the ball accommodating through hole 210.

The above is a detailed description of the rolling brush assembly in the embodiments of the present application. In a further embodiment of the present application, a sweeping robot using this rolling brush assembly is also provided.

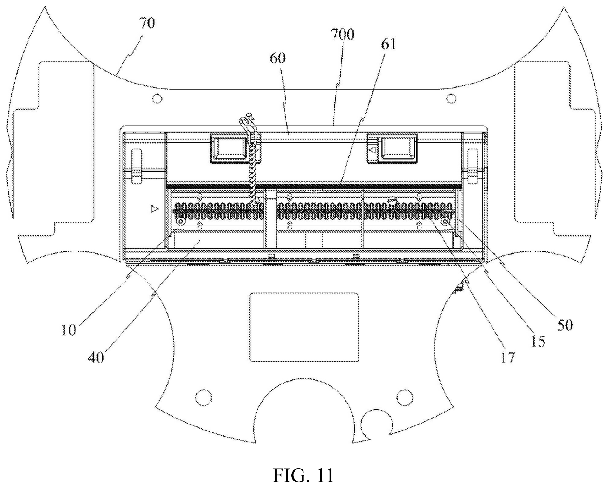

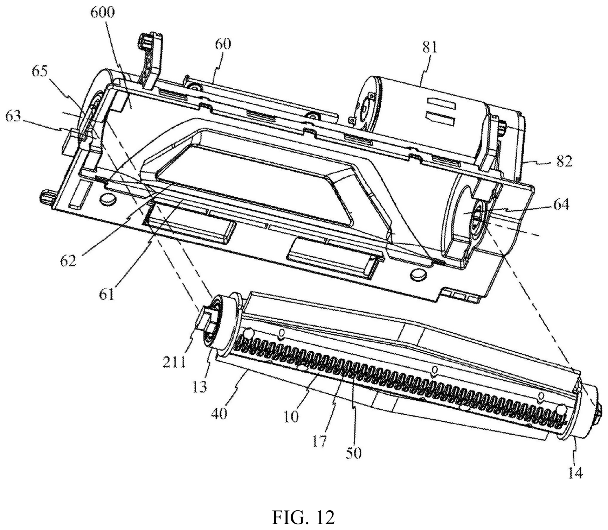

FIG. 11 is a partial schematic structural view of a sweeping robot according to an embodiment of the present application. FIG. 12 is a schematic structural view of an integrated cavity shell of a sweeping robot according to an embodiment of the present application. Referring to FIG. 11 and FIG. 12, the sweeping robot in the embodiment of the present application may include a mobile chassis 70 (only a chassis panel of the mobile chassis 70 is exemplarily illustrated in the drawings), an integrated cavity shell 60 carried on the mobile chassis 70, and the rolling brush assembly described in the foregoing embodiments.

The mobile chassis 70 has a chassis opening 700, the integrated cavity shell 60 has a sweeping window 61 exposed at the chassis opening 700, the rolling brush assembly is installed in the integrated cavity shell 60, and an installation position of the rolling brush assembly in the integrated cavity shell 60 causes the cleaning brush 40 to extend out of the sweeping window 61 during the rotation of the rotating main shaft 10 relative to the fixed shaft assembly 20 to perform a sweeping operation.

The integrated cavity shell 60 is further fixedly installed with a driving motor 81, a first shaft end of the rotating main shaft 10 can be in transmission connection with the driving motor 81 (for example, through a speed reduction mechanism 82 in transmission connection with the driving motor 81), and the fixed shaft assembly 20 inserted into the hollow shaft cavity 100 of the rotating main shaft 10 from the second shaft end opposite to the first shaft end can be fixed in the integrated cavity shell 60.

For example, the integrated cavity shell 60 can have a rolling brush cavity 600 for accommodating the rolling brush assembly, the sweeping window 61 is communicated with the rolling brush cavity 600, cavity walls of the rolling brush cavity 600 on two opposite side have a support shaft base 63 and a power shaft base 64 respectively, wherein:
the first shaft end of the rotating main shaft 10 (for example, the drive end cover 14) can be installed at the power shaft base 64, an input shaft of the speed reduction mechanism 82 is connected to the driving motor 81, an output shaft of the speed reduction mechanism 82 is located at the power shaft base 64, and the first shaft end of the rotating main shaft 10 (for example, the drive end cover 14) can be coaxially connected with the output shaft of the speed reduction mechanism 82 at the power shaft base 64;
the second shaft end of the rotating main shaft 10 (for example, the limit end cover 13) can be installed at the support shaft base 63, the support shaft base 63 has a rotation-locking notch 65, and the rotation-locking shaft end 211 of the fixed shaft assembly 20 can be rotationally locked by the rotation-locking notch 65 at the support shaft base 63.

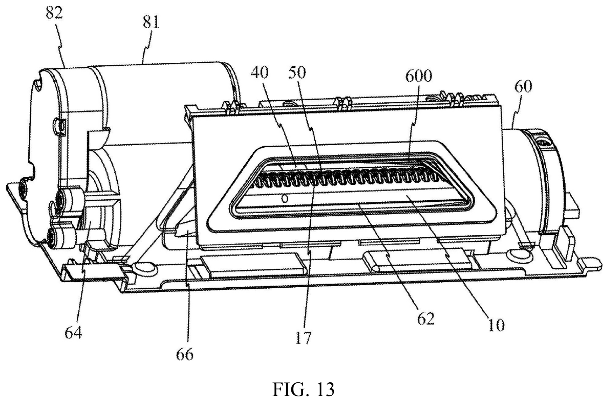

FIG. 13 is a schematic diagram of a docking structure between the integrated cavity shell as shown in FIG. 12 and a dust collection member. Referring to FIG. 13 and also referring back to FIG. 12, in the embodiment of the present application, the integrated cavity shell 60 may further have a suction window 62 for communicating with a dust collection mechanism, for example, the suction window 62 can be communicated with the rolling brush cavity 600, and the suction window 62 can be installed with a channel assembly 66 for docking with the dust collection mechanism.

The above descriptions are only preferred embodiments of the present invention and are not intended to limit the present invention. Any modifications, equivalent replacements, improvements, etc., made within the spirit and principles of the present invention shall be included within the protection scope of the present invention.

## Claims

1. A rolling brush assembly for a sweeping robot, wherein the rolling brush assembly comprises:
a rotating main shaft (10), wherein the rotating main shaft (10) is installed with a cleaning brush (40) extending radially from an outer shaft wall, the rotating main shaft (10) further has a hollow shaft cavity (100) and a mounting slit (15) penetrating from the outer shaft wall to the hollow shaft cavity (100), wherein the mounting slit (15) extends along an axial direction of the rotating main shaft (10), and the mounting slit (15) and the cleaning brush (40) are arranged in a staggered configuration;
a cutting assembly (50), wherein the cutting assembly (50) comprises a fixed tooth row member (51) fixedly inserted into the mounting slit (15) and a movable tooth row member (52) movably inserted into the mounting slit (15), wherein the fixed tooth row member (51) comprises a plurality of fixed teeth (510) protruding beyond the outer shaft wall, and the movable tooth row member (52) comprises a plurality of movable teeth (520) protruding beyond the outer shaft wall;
a fixed shaft assembly (20), wherein the fixed shaft assembly (20) is inserted into the hollow shaft cavity (100);
a moving member (30), wherein the moving member (30) is movably installed within the hollow shaft cavity (100) along the axial direction, and the moving member (30) is in transmission connection with the fixed shaft assembly (20) and the movable tooth row member (52);
wherein during rotation of the rotating main shaft (10) driving the cleaning brush (40), the cutting assembly (50), and the moving member (30) relative to the fixed shaft assembly (20), the transmission connection causes the moving member (30) to generate reciprocating motion in the axial direction, and the reciprocating motion drives the movable teeth (520) to perform a reciprocating staggered cutting motion relative to the fixed teeth (510) in the axial direction.

2. The rolling brush assembly according to claim 1, wherein,
the rotating main shaft (10) further comprises a plurality of guide comb teeth (17) distributed at intervals along the axial direction on the outer shaft wall, so as to form a guide channel spanning the mounting slit (15) between every two adjacent guide comb teeth (17);
the fixed teeth (510) are aligned with the guide comb teeth (17) in the axial direction;
a motion stroke of reciprocating staggered motion of the movable teeth (520) relative to the fixed teeth (510) is greater than a channel width of the guide channel in the axial direction.

3. The rolling brush assembly according to claim 2, wherein,
the guide comb teeth (17) are distributed at intervals at slit edges on opposite sides of the mounting slit (15) in a slit width direction.

4. The rolling brush assembly according to claim 3, wherein,
the guide comb teeth (17) have comb tooth side walls flush with the slit edges;
wherein the fixed teeth (510) abut against the comb tooth side walls of the guide comb teeth (17) at the slit edge on one side of the mounting slit (15), and the movable teeth (520) are in sliding cooperation with the comb tooth side walls of the guide comb teeth (17) at the slit edge on the other side of the mounting slit (15).

5. The rolling brush assembly according to claim 1, wherein,
the fixed tooth row member (51) comprises a fixed tooth installation strip (511) fixed within the mounting slit (15), and the fixed teeth (510) protrude beyond the outer shaft wall of the rotating main shaft (10) from an outer side edge of the fixed tooth installation strip (511) close to the outer shaft wall;
the movable tooth row member (52) comprises a movable tooth installation strip (521) movably installed within the mounting slit (15), and the movable teeth (520) protrude beyond the outer shaft wall of the rotating main shaft (10) from an outer side edge of the movable tooth installation strip (521) close to the outer shaft wall;
the movable tooth row member (52) further comprises a movable tooth transmission arm (523) extending from an inner side edge of the movable tooth installation strip (521) close to the hollow shaft cavity (100) into the hollow shaft cavity (100), and the movable tooth transmission arm (523) is in transmission connection with the moving member (30).

6. The rolling brush assembly according to claim 5, wherein,
the fixed tooth row member (51) further comprises a fixed tooth installation lug (512) extending from an inner side edge of the fixed tooth installation strip (511) close to the hollow shaft cavity (100) into the hollow shaft cavity (100), and the fixed tooth installation strip (511) is fixed within the mounting slit (15) by a fixed connection of the fixed tooth installation lug (512) with the rotating main shaft (10) within the hollow shaft cavity (100);
the movable tooth row member (52) further comprises a movable tooth hanging lug (522) extending from an inner side edge of the movable tooth installation strip (521) close to the hollow shaft cavity (100) into the hollow shaft cavity (100), and the movable tooth installation strip (521) is movably installed within the mounting slit (15) by movable installing of the movable tooth hanging lug (522) with the rotating main shaft (10) along the axial direction within the hollow shaft cavity (100).

7. The rolling brush assembly according to claim 6, wherein,
the fixed tooth installation lug (512) is provided with a circular hole, and the movable tooth hanging lug (522) is provided with a long hole extending along the axial direction;
the rotating main shaft (10) further comprises an installation boss (16) located within the hollow shaft cavity (100), and the installation boss (16) is used for threaded connection with an installation bolt (53) passing through the circular hole and the long hole;
wherein an insertion cooperation of the installation bolt (53) with the circular hole causes the fixed tooth installation lug (512) to be fixedly connected with the rotating main shaft (10) within the hollow shaft cavity (100), and a sliding cooperation of the installation bolt (53) with the long hole causes the movable tooth hanging lug (522) to be movably assembled with the rotating main shaft (10) along the axial direction within the hollow shaft cavity (100).

8. The rolling brush assembly according to claim 1, wherein,
the moving member (30) is fixedly engaged with the rotating main shaft (10) in a rotation direction of the rotating main shaft (10) relative to the fixed shaft assembly (20), so as to constrain the moving member (30) to rotate synchronously with the rotating main shaft (10).

9. The rolling brush assembly according to claim 8, wherein,
the rotating main shaft (10) further comprises a sliding keyway (180) located within the hollow shaft cavity (100);
the moving member (30) has a radial convex key (311) inserted into the sliding keyway (180);
a relative position of the radial convex key (311) and the sliding keyway (180) in the rotation direction of the rotating main shaft (10) relative to the fixed shaft assembly (20) are fixed, and the sliding keyway (180) provides a cooperation allowance for sliding of the radial convex key (311) in the axial direction.

10. The rolling brush assembly according to claim 9, wherein,
the rotating main shaft (10) further comprises a liner column shell (18) fixed within the hollow shaft cavity (100), and the sliding keyway (180) is provided on a column side wall of the liner column shell (18);
the moving member (30) comprises a transmission slider (31) located within a shell cavity of the liner column shell (18), and the radial convex key (311) is protruded from a first slider side wall of the transmission slider (31) facing the sliding keyway (180).

11. The rolling brush assembly according to claim 1, wherein,
the movable tooth row member (52) further comprises a movable tooth transmission arm (523) extending into the hollow shaft cavity (100);
the moving member (30) achieves transmission connection with the movable tooth row member (52) by a fixed engagement on the movable tooth transmission arm (523) in the axial direction, wherein the fixed engagement constrains the movable tooth transmission arm (523) such that: in response to the reciprocating motion of the moving member (30), the cutting motion of the movable teeth (520) is triggered.

12. The rolling brush assembly according to claim 11, wherein,
the moving member (30) has an engagement groove (315), wherein the movable tooth transmission arm (523) is inserted into the engagement groove (315), a relative position of the engagement groove (315) and the movable tooth transmission arm (523) in the axial direction are fixed, and a groove width dimension of the engagement groove (315) in a direction perpendicular to the axial direction has an expansion allowance relative to the movable tooth transmission arm (523).

13. The rolling brush assembly according to claim 12, wherein,
the rotating main shaft (10) further comprises a liner column shell (18) fixed within the hollow shaft cavity (100), and a shell cavity of the liner column shell (18) is communicated with the mounting slit (15);
the moving member (30) comprises a transmission slider (31) located within the shell cavity of the liner column shell (18), and the engagement groove (315) is located on a second slider side wall of the transmission slider (31) facing the mounting slit (15).

14. The rolling brush assembly according to claim 1, wherein,
the moving member (30) and the fixed shaft assembly (20) achieve transmission connection through eccentric contact, and a contact position of the eccentric contact is offset from a rotation axis of the rotating main shaft (10) relative to the fixed shaft assembly (20).

15. The rolling brush assembly according to claim 14, wherein,
the moving member (30) comprises an inclined turntable (32), wherein the inclined turntable (32) is inclined relative to the rotation axis, and a turntable center of the inclined turntable (32) is arranged coaxially with the rotation axis;
the fixed shaft assembly (20) has an eccentric protrusion (23) offset from the rotation axis, and the eccentric protrusion (23) contacts a turntable edge of the inclined turntable (32);
wherein the inclined turntable (32) is configured to, in response to a change in contact position between the turntable edge and the eccentric protrusion (23) during the rotation, generate the reciprocating motion.

16. The rolling brush assembly according to claim 15, wherein,
the fixed shaft assembly (20) comprises a fixed shaft body (21) and a cylindrical sleeve box (22), wherein the fixed shaft body (21) has a rotation-locking shaft end (211) located outside the hollow shaft cavity (100) and a guiding shaft end (212) inserted into the hollow shaft cavity (100), and the cylindrical sleeve box (22) is fixedly installed on the guiding shaft end (212);
the eccentric protrusion (23) comprises a shaft-end arc surface boss (231) located on an end surface of the guiding shaft end (212) and a sleeve-box arc surface block (232) located on an inner wall of a box cavity of the cylindrical sleeve box (22);
the inclined turntable (32) is located in the cylindrical sleeve box (22), and during the rotation:
a first position area of the turntable edge of the inclined turntable (32) contacts the shaft-end arc surface boss (231), so as to cause the moving member (30) to undergo a first translation in the axial direction away from the fixed shaft assembly (20);
a second position area of the turntable edge of the inclined turntable (32) contacts the sleeve-box arc surface block (232), so as to cause the moving member (30) to undergo a second translation in the axial direction towards the fixed shaft assembly (20);
wherein a starting position of the first position area and an ending position of the second position area are both a first edge position of the turntable edge that is farthest from the guiding shaft end (212) in the axial direction; and an ending position of the first position area and a starting position of the second position area are both a second edge position of the turntable edge that is closest to the guiding shaft end (212) in the axial direction.

17. The rolling brush assembly according to claim 16, wherein,
the moving member (30) further comprises a transmission slider (31) for transmission connection with the movable tooth row member (52) and fixed engagement with the rotating main shaft (10) in the rotation direction of the rotating main shaft (10) relative to the fixed shaft assembly (20);
the transmission slider (31) is located outside the cylindrical sleeve box (22), the moving member (30) further comprises a connecting shaft rod (33), and the connecting shaft rod (33) penetrates the cylindrical sleeve box (22) and is connected between the turntable center of the inclined turntable (32) and the transmission slider (31).

18. The rolling brush assembly according to claim 1, wherein,
the moving member (30) and the fixed shaft assembly (20) achieve transmission connection through screwing cooperation, and a screwing axis of the screwing cooperation is inclined relative to the axial direction.

19. The rolling brush assembly according to claim 18, wherein,
the moving member (30) comprises a guide rotating shaft (32'), wherein the guide rotating shaft (32') has an inclined annular groove (320), wherein a central axis of the inclined annular groove (320) is inclined relative to the axial direction, and the screwing axis of the screwing cooperation coincides with the central axis of the inclined annular groove (320);
the fixed shaft assembly (20) comprises an inner sleeve (21') and a guiding ball (22'), wherein the inner sleeve (21') is provided with a ball accommodating through hole (210) penetrating a sleeve wall, the guiding ball (22') is rollably accommodated in the ball accommodating through hole (210) and has spherical cooperation with the inclined annular groove (320) covered by the inner sleeve (21');
wherein the spherical cooperation between the guiding ball (22') and the inclined annular groove (320) is used for guiding screwing of the moving member (30) relative to the fixed shaft assembly (20), and the moving member (30) is configured to, in response to a change in spherical cooperation position between the guiding ball (22') and the inclined annular groove (320), generate the reciprocating motion.

20. The rolling brush assembly according to claim 19, wherein,
the fixed shaft assembly (20) further comprises an outer sleeve (23'), and the outer sleeve (23') is sleeved outside the inner sleeve (21') and covers the guiding ball (22').

21. The rolling brush assembly according to claim 1, wherein,
the rotating main shaft (10) comprises at least two mounting slits (15) arranged spaced apart by a preset phase interval;
the cutting assembly (50) comprises at least two sets of the fixed tooth row member (51) and the movable tooth row member (52), wherein each set of the fixed tooth row member (51) and the movable tooth row member (52) is inserted into a respective mounting slit (15).

22. The rolling brush assembly according to claim 21, wherein,
the rotating main shaft (10) comprises a first semi-cylindrical shell (11) and a second semi-cylindrical shell (12), wherein cylindrical surfaces of the first semi-cylindrical shell (11) and the second semi-cylindrical shell (12) are complementary to each other, the first semi-cylindrical shell (11) and the second semi-cylindrical shell (12) are spliced together by snap-fit engagement, a pair of cleaning brushes (40) are fixedly clamped by seams between the first semi-cylindrical shell (11) and the second semi-cylindrical shell (12), and the hollow shaft cavity (100) is surrounded by the first semi-cylindrical shell (11) and the second semi-cylindrical shell (12);
the rotating main shaft (10) comprises two mounting slits (15) respectively provided on the first semi-cylindrical shell (11) and the second semi-cylindrical shell (12), wherein a phase interval between the two mounting slits (15) is 180°, and the two mounting slits (15) are located in a symmetry plane between the pair of the cleaning brushes (40).

23. A sweeping robot, wherein the sweeping robot comprises a mobile chassis (70), an integrated cavity shell (60) carried on the mobile chassis (70), and the rolling brush assembly according to any one of claims 1 to 22, the rolling brush assembly being installed in the integrated cavity shell (60), wherein:
the mobile chassis (70) has a chassis opening (700), the integrated cavity shell (60) has a sweeping window (61) exposed at the chassis opening (700) and a suction window (62) for communicating with a dust collection mechanism, wherein an installation position of the rolling brush assembly in the integrated cavity shell (60) causes the cleaning brush (40) to extend out of the sweeping window (61) during the rotation to perform a sweeping operation;
the integrated cavity shell (60) is fixedly installed with a driving motor (81), wherein a first shaft end of the rotating main shaft (10) is in transmission connection with the driving motor (81), the fixed shaft assembly (20) is inserted into the hollow shaft cavity (100) of the rotating main shaft (10) from a second shaft end opposite to the first shaft end, and the fixed shaft assembly (20) is fixed in the integrated cavity shell (60).
